# EUROPEAN PATENT SPECIFICATION

(11) **EP 2 678 554 B1**
(45) Date of publication and mention of the grant of the patent: **13.07.2016**
(21) Application number: 12713237.1
(22) Date of filing: 22.02.2012
(51) Int. Cl.: F03B 13/16, B63B 22/00

(54) **WAVE ENERGY ABSORBER**
WELLENENERGIEABSORBIERER
ABSORBEUR D'ÉNERGIE HOULOMOTRICE

(30) Priority: 22.02.2011 GB 201103009
(43) Date of publication of application: 01.01.2014
(73) Proprietor: Albatern Limited, Pentlandfield Roslin, Midlothian EH25 9RE (GB)
(72) Inventor: FINDLAY, David, Roslin Midlothian EH25 9RE (GB)
(74) Representative: Gordon, Naoise Padhraic Edward
(86) International application number: PCT/GB2012/000181
(87) International publication number: WO 2012/114070

(56) References cited:
- WO-A1-2010/115241
- WO-A2-2010/082033
- US-A1- 2007 046 027
- US-A1- 2010 171 312

## Description

### Introduction

The invention relates to the field of wave energy. More specifically, the invention relates to the primary interface between the energy in the waves and the power take-off mechanism within a wave energy device.

### Background

Wave energy conversion systems come in many different varieties. Typically they will be composed of at least two bodies, one of which is subject to the wave loading. This body is typically referred to as the Wave Activated Body (WAB). For the purposes of this document it will also be referred to as an Absorber. The motion response of the WAB relative to the second, or reactive body, then allows for power capture for the device.

Wave energy devices must be proven to be economically viable. The revenue from a wave energy device is from the sale of power, desalinated water of any other suitable product that the device can be adapted to provide. Therefore, it is necessary to capture large quantities of power from an incident wave energy field, which requires a large WAB. The capital cost for the fabrication and installation of the wave energy plant must be paid for from the revenue over the lifetime of the device.

The requirement for a large Absorber imposes significant barriers to the construction, manoeuvrability, affordability and practicality of a wave energy conversion device during fabrication, transportation, deployment, operation and recovery activities. Many existing wave energy designs therefore have large associated capital costs (CAPEX). In addition, expensive specialist vessels are typically required to house, transport and manoeuvre the device in and out of the water throughout its lifetime. This results in large operational costs (OPEX).

The lifetime of a wave energy plant will be determined by the ability of its key components to withstand repeated cycles of normal loading and occasional extreme loads. A wave plant must be optimised for generation at the mean loading, yet built to withstand the peak loads. This dilemma forces many wave energy developers to over engineer devices resulting in very heavy and very expensive structures. When considering the peak loading that the device will encounter, the designer must consider the slamming forces that large hydrostatic vessels are subject to as they penetrate the water surface and the related 'snatch' mooring loads that are caused by rapid deceleration of the body as the mooring line goes taut. Survival is enhanced by minimising these loads in particular.

The patent literature on wave energy systems is extensive. Many of the patents relate to oscillating water column (OWC) type devices which utilise a compressible medium, usually air, as the working fluid. Other patents refer to raft and articulated barge type devices such as the Pelamis marketed by OPD, the Danish Wave Power float-pump device: US Pat. No. 2,093,351 and Hagen's array: US Pat 4,408,454, where such devices comprise of a series of articulated sections which are located on, or near to, the water surface. Other patents relate to so called Single Point Absorber's (SPA's). These devices tend to be relatively small compared to the incident wavelength. There are many examples of SPA's in the patent record. Examples of existing technologies such as OPT's PowerBuoy, Finavera's AquaBuOY and Wavebob Ltd's Wavebob: US Pat. No. 7,581,901, describe devices based on the principle of a heaving buoy moving relative to a restraint either provided through a reactive body or the sea bed. These devices are often limited to capturing energy from purely the heave response of the buoy and therefore have a reduced efficiency. They are also subject to large slamming forces, end stop issues, and, depending on the reactive structure, changes in water depth due to tidal variation.

An alternative to the surface buoy type SPA is to have a largely submerged WAB that responds to horizontal as well as vertical forces. Examples of these types of devices are evident in patents WO201011524 (CETO), WO2009076712A1 (CETO), WO2008065684A1 (40South Energy), US2010/0171312 A1 and US2007/0046027. These patents describe submerged, substantially neutrally buoyant Absorbers often formed from hollow vessels or similarly appropriate fabrications. Structural inertia is minimised and the absorbers are flooded with sea water while in operation. The response of the device is then largely dictated by the mass of the entrained fluid and an unloaded or unconstrained Absorber can be expected to respond as the fluid would to which it is coupled. While these patents describe an effective means of harnessing wave energy, they present a challenge to install as the entrained mass of water must often be manoeuvred with the device if towed to site by a workboat with sufficient deck space suitable for deployment of the structure.

Other relevant patents include WO2010082033 which describes a network arrangement of substantially submerged Absorbers linked together through a hexagonal space frame construction, JP59043987(A) which describes a bag member which can be contracted and expanded and WO9922137(A1) which describes a variable added mass from water affecting buoyancy.

### SUMMARY OF THE INVENTION

A first aspect of the invention is provided by a wave energy absorber as defined in claim 1.

Preferably, the inlet valve is positioned towards the second position.

Preferably, the outlet valve is positioned to allow fluid to leave the device above the expandable shell, thereby assisting in the provision of a positive fluid pressure inside the expandable shell.

Preferably the outlet valve is positioned at or near the first end of the central column.

Preferably, temporal pressure gradients across the expandable shell surface arise from differences between the constrained motion of fluid internally to the shell structure and the motion of the external fluid particles.

Preferably, the local deformation of the shell induces fluid flow in a substantially orbital motion within the expandable shell.

These effects contribute to the existence of temporary pressure gradients across the lower face of the expandable shell which can, through the provision of uni-directional valves at the appropriate location, result in an increase in the volume of entrained fluid within the expandable shell.

Through this mechanism the expandable shell can be encouraged to 'auto-inflate' with fluid from the surrounding medium up to a limit defined by the material constraints of the expandable shell.

Advantageously, the wave energy absorber can be transported to a location where it is to be deployed with the expandable shell in a retracted position where its radius is minimised. This makes the wave energy absorber easy to transport during to deployment. Once it has reached its deployment site, introduction of the device in a substantially vertical orientation into the wave medium e.g. a marine environment will cause expansion of the shell as described herein.

Optionally, the shell connector has greater buoyancy than the central column and the expandable shell is connected to the central column at or near the first end.

Optionally, the shell connector has less buoyancy than the central column and the expandable shell is connected to the central column at or near the second end.

Preferably, the expandable shell comprises a non rigid, fabric-type, material.

Optionally, the expandable shell comprises one or more flexible ribs which extend between opposing ends of the expandable shell and which bend and are under tension when the buoyancy forces are applied on deployment of the wave energy absorber.

Preferably, the ribs are attached by means of a pin joint or any other suitable attachment to the top of the central column and the sliding collar respectively.

Preferably, the ribs are prevented from lateral excursion relative to the skin by the provision of fixings.

The Absorber may be equipped with ducting and valves or any other similar means that allow the volume of water entrained within the expandable shell to be altered in a controlled manner. Alternatively the central spinal column may be equipped with ducting and valves or any other similar means that allow the volume of water entrained within the expandable shell to be altered in a controlled manner.

Preferably, the valves are configured such that ingress of water occurs through valves located in the lower portion of the assembly and egress of water occurs through valves located at the upper extremity of the absorber.

Preferably, the valves at the upper extremity are located above the water surface such that a positive pressure is created internal to the absorber.

Preferably, the valves can be used in either a passive or active mode to evacuate the absorber of sea water during survival conditions.

Alternatively, the valves may be active and controlled through pneumatic, electronic or mechanical actuation systems.

Alternatively the valves may be of skin fitting type and located at an appropriate location on the expandable shell.

Optionally, the expandable shell is substantially conical in shape but may be any other shape that enhances the power capture potential, hydrostatic response or survivability characteristics.

Preferably, the expandable shell is attached by means of a clamp.

Preferably, the shell connector is slidably connected to the central column.

Optionally the shell connector is a sleeve mounted on the central column.

Preferably, the first end of the central column comprises buoyancy means.

Optionally, the expandable shell is provided internally with a secondary body of substantially neutral buoyancy. In this configuration the secondary body is free to move independently of the expandable shell, although constrained such that it remains within the enclosed volume of the shell. The function of the secondary body is to encourage the orbital motion of the fluid within the shell such as the inflation mechanism is enhanced

Advantageously, the present invention can be moved into a low draft towing state for deployment from a beach or quayside. The buoyancy of the wave energy absorber may be varied to allow it to sink to a depth below the surface of the wave medium to protect it from extreme waves and therefore to enhance its survivability characteristics and the potential to tune the device to improve the power capture.

Preferably, the device is equipped with a series of buoyancy modules located at suitable locations along the central column.

Preferably, the buoyancy modules comprise a sealed vessel.

Preferably, the buoyancy modules may be partially or substantially filled with sea water or any other comparatively dense fluid to vary their buoyancy.

Preferably, the buoyancy modules may be partially or substantially filled with air or any other fluid of comparatively low density when compared with sea water to vary their buoyancy.

### Brief Description of the Drawings

The present invention will be described by way of example only with reference to the accompanying drawings in which:
Figures 1a is a side view of a first embodiment of the present invention in its retracted position and shown floating on a body of water, figure 1b is a side view of the embodiment of the present invention shown in figure 1a during deployment and figure 1c is a side view of the embodiment of the present invention shown in figure 1 a when fully deployed;
Figure 2 is a perspective view of a second embodiment of the present invention in a substantially retracted position, with the shell absent;
Figure 3 is a side view of the second embodiment of the present invention in a substantially expanded position, with the shell absent;
Figure 4 is a perspective view of the second embodiment of the present invention with shell expanded; and
Figure 5 is a side view of the second embodiment with its shell in an operational state.

### Detailed Description of the Drawings

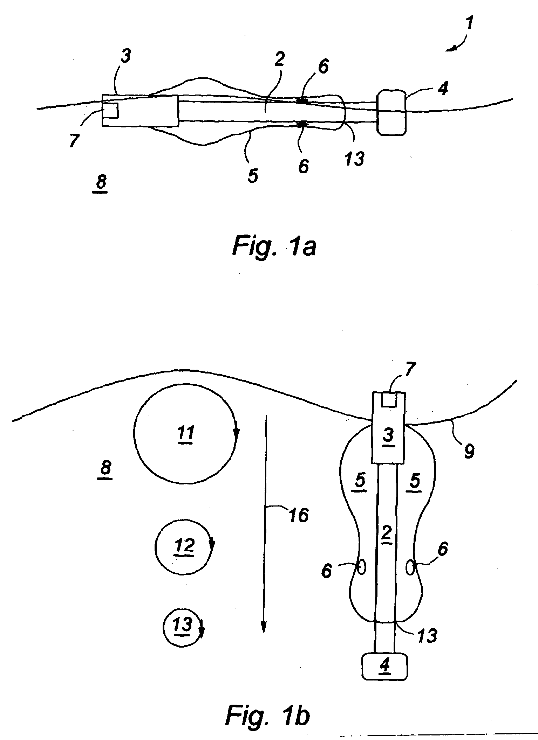

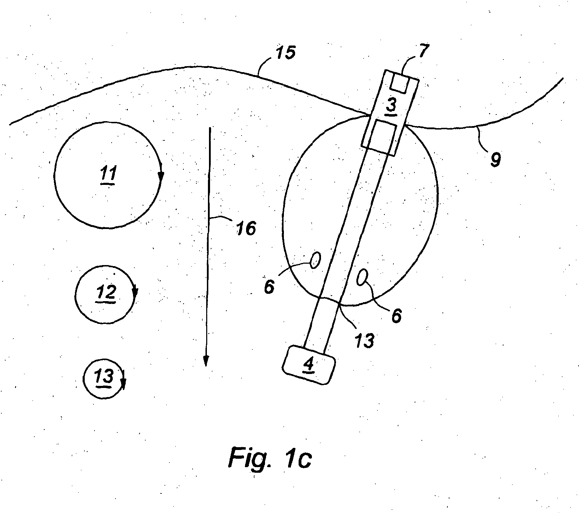

Figures 1a, 1b and 1c show a first embodiment of the present invention in which inflation of the expandable shell is caused firstly by fluid motion in the wave medium which causes a flow of fluid into the expandable shell and secondly by waves incident on the outer surface of the expandable shell which causes localised movement of the expandable shell which,-in conjunction with the fluid entering via inlet valves acts tt pump fluid into the expandable shell.

Figure 1a shows a side view of a first embodiment of the present invention in its retracted position and shown floating on a body of water 9 prior to deployment of the apparatus. The figure shows a wave energy absorber 1 which has a central column 2 with a first end containing an upper buoyancy module 3 and a second end with a counterweight 4. An expandable shell 5 is attached to the upper buoyancy module 3 and to a connector 13 situated on the central column 2. An inlet valve 6 is positioned towards the second end 4.

Figure 1b shows the apparatus of figure 1 a during deployment. The wave energy absorber is positioned vertically with respect to the surface of the water 9. Wave particle trajectories11, 12 and 13 illustrate the idealised movement of particles of water 8 as caused by the energy of the wave which is proportional to the amplitude of the wave at the surface 15. The energy of the wave, and therefore the extent to which particles of water are displaced, decreases exponentially as the depth 16 below the water surface increases. Accordingly, the wave particle trajectories become progressively smaller as depth 16 increases. In this figure, the process of filling the expandable shell has commenced by the introduction of water from the body of water 8 into the expandable shell.

In use, water enters the expandable shell 5 via valves 6. Outside the expandable shell 6, horizontal and vertical pressure gradients induced by or associated with the passage of a wave front 15 across the surface of the expandable shell, cause a local deformation of the shell which in turn causes a predominantly orbital motion of the fluid entrained within the shell cavity. Temporal pressure gradients across the shell surface arise from differences between the constrained motion of the fluid internally to the shell structure and the motion of the external fluid particles.

In addition, the response to the incident waves, particularly in the heave (vertical) mode results in the creation of a pressure wave internal to the expandable shell which travels in the vertical sense and some portion of which is reflected from the internal face of the expandable shell particularly as the expandable shell reaches its maximum extent. These effects contribute to the existence of temporary pressure gradients across the lower face of the expandable shell which can, through the provision of uni-directional valves at the appropriate location, result in a pumping action which increases the volume of entrained fluid within the expandable shell. Through this mechanism the expandable shell can be encouraged to 'auto-inflate' with fluid from the surrounding medium up to a limit defined by the material constraints of the expandable shell.

Figure 1c shows the apparatus of figures 1a and 1b once fully deployed with the expandable shell 5 inflated to its fullest extent by the introduction of water through valves 6 and the pumping action described above.

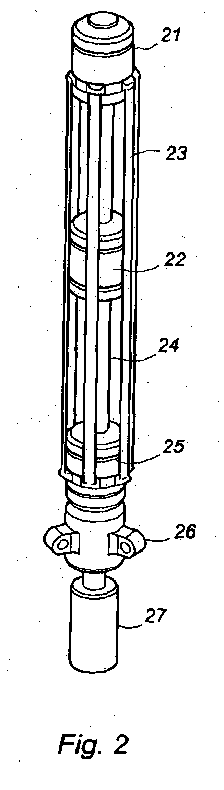

Figure 2 is a perspective view of a first embodiment of the invention without the expandable shell. Buoyancy is provided to the shell connector and/or the central column by the addition of buoyancy modules. An upper buoyancy module 21 is permanently fixed to the first end of the central column 24. A secondary buoyancy module 23 is also attached to the central column24 and may be either fixed in position or capable of sliding along any available line of motion relative to the column 24. A further buoyancy module 25 is positioned towards the bottom of the column and can slide relative to the column24 forming the shell connector..

A set of flexible ribs 22, suitably comprising at least 3 or more individual ribs, is attached to the upper buoyancy module 21 at the first end of the central column 24 and to the further buoyancy module 25 or shell connector..

When the apparatus is substantially collapsed as depicted in figure 1, the rib structure 22 lies generally parallel to the central column 24. A variable mass 27 is attached to the central column 24 such that it is on the opposite end of the central column 24 to the upper buoyancy module21.

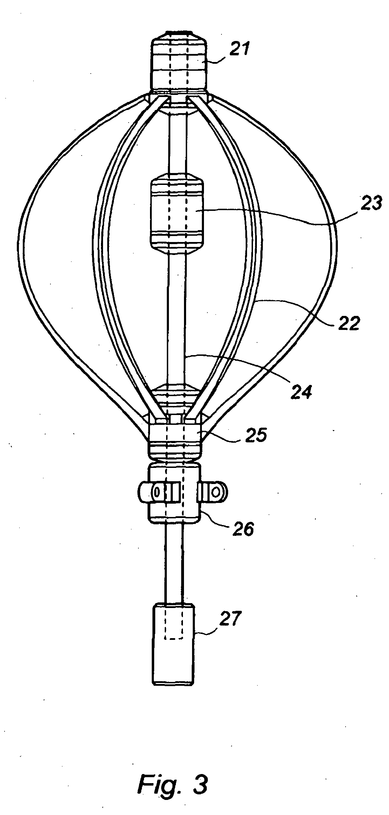

Figure 3 is a side view of the embodiment of figure 1 wherein, upon deployment in water, the further buoyancy module 25 experiences a buoyancy force which causes it to move up the central column 24 towards the first end of the central column 24. This movement also causes the flexible ribs 22 to bend outwards as shown. This movement gives the expandable shell (not shown) a substantially spherical shape when the wave energy absorber is deployed.

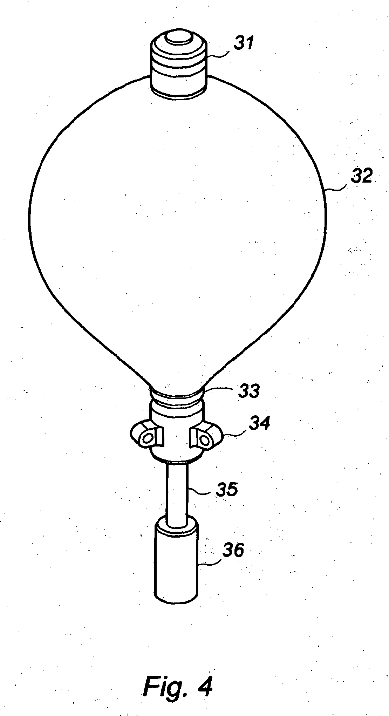

Figure 4 shows a view of the invention with its expandable shell 32 secured to an upper buoyancy module 31 and lower buoyancy module 33. In this embodiment the lower buoyancy module 33 is connected to a node 34, which together act as a single body free to slide relative to the central column 35. A variable mass 36 is attached the central column 35 such that it is on the opposite end of the column to the upper buoyancy module 31.

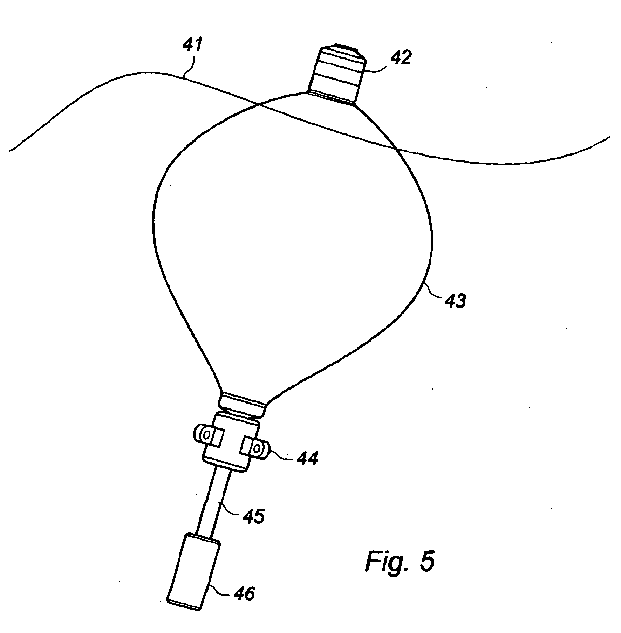

Figure 5 shows the invention in a substantially inflated state piercing the surface of a body of water 41. The upper buoyancy module 42 and part of the expandable shell 43 in a preferred embodiment of the invention at various stages of its operation pierce the surface of the water. The expandable shell 43 is fixed in place by the upper buoyancy module 42 and at node 44 and is free to slide relative to a central column 45. A variable mass 46 is attached permanently to the central column 45 such that it is on the opposite end of the central column 45 to the upper buoyancy module 42.

In operational mode, the Absorber of the present invention is suspended just beneath the water surface locating it in the region of maximum wave energy density. The central column that runs through the middle of the Absorber supports buoyancy compartments that can control the orientation and draft of the device and transmit the hydrostatic loading to the power take-off components. In operational mode the central column is orientated vertically and will pitch and heave around this state in response to incident waves.

In transport mode, the central column is orientated horizontally and the entrained water is evacuated from the Absorber. This allows the structure to be towed using small deployment vessels and manoeuvred into shallow water depths with relative ease.

Relative movement of the central column and the shell connector may be achieved in a number of ways. For example, a permanent node structure can be provided which can slide relative to a central column. Alternatively a buoyancy module and a permanent node located towards the bottom (most submerged, in use) end of the absorber comprises a single body, such that a sliding motion relative to a central column is feasible along any available length of the central column.

The following discussion provides a general description of various physical properties which may be attributed to at least some of the embodiments of the present invention.

### Hydrostatic response

While being substantially immersed, the Absorber has a surface piercing component and the structure therefore exhibits a hydrostatic response. This differentiates the design from another similar approach by the CETO wave energy systems that previously attempted to use a submerged sphere as an absorber of wave energy. The hydrostatic response is important in this instance as it provides a restoring force to the absorber that allows it to act as an oscillator that can be tuned to an incident wave field. The hydrostatic force is provided by buoyancy modules that are attached to the central column of the Collapsing Absorber. The structure includes two different buoyancy modules: fixed buoyancy modules that are permanently filled and prevent the device from sinking completely; and variable buoyancy modules that are used to alter the orientation and response of the device.

### Power Capture

The Absorber will track the orbital wave particle motions of the fluid beneath the wave surface. For a perfect sphere this would result in horizontal and vertical translational motion of the structure in response to the waves. This motion can be transformed into a combination of pitch (angular) and heave (vertical translation) by restraining the base of the central column. Providing a suitable reactive structure can be found, it is now possible to capture power from the motion of the absorber in pitch or heaving modes.

### Tuning

Wave energy devices are intrinsically sensitive to the frequency (period) of the incident waves: the more vigorously the device responds - the more energy can be captured. The magnitude of the response will be at its greatest when the natural frequency of the device is the same or similar to the incident wave frequency and the natural frequency of the device is dictated by the ratio between the restoring force and the inertia for each mode of oscillation. A key feature of the invention is the ability to vary the inertia by varying the volume of the absorber (entrained fluid + added inertia).

The present invention may also alter the restoring force. There are two principle forms of restoring force acting on an absorber: one is related to the mooring tension acting against the offset at the base of the node thus providing a restoring torque acting to return the node to the vertical, the other is defined by the hydrostatic buoyancy force which acts to maintain the level of submergence of the device and the distance between the centre of buoyancy and centre of mass resulting in a torque acting to return the node to the vertical. By varying the buoyancy distribution in the node/absorber assembly, 'slow tuning' to a particular dominant wave frequency to optimize power capture is viable.

### Operations & Transport

One of the principal advantages of the present invention is the ease with which it can be installed and recovered. This stems from the unique way in which the device folds from its deployment/operational state into a raft of low draft that is suitable for towing and manoeuvring without excessive bollard pull and hence a reduction in operational expenditure. By including the Collapsible Absorber in wave energy converters, the overall drag on a structure in towing mode will be dramatically reduced meaning that smaller vessels will be required to manipulate the device in the water: On-land transportation would also be improved significantly by the invention as the overall volume and mass of any device would also be reduced.

Transition from the operational state to the towing state and vice versa requires modification to the buoyancy distribution of the Collapsible Absorber. Generally if the centre of buoyancy (COB) is above the centre of mass (COM) the device will be stable in the operational state, and, conversely, if the COB is at the same level or beneath the COM the device will be stable in the transport/towing state.

### Actuation System

Included within the scope of the present invention are means for altering the volume of the absorber during operation, means for altering the orientation of the device and means for altering the mass and buoyancy distribution within the device.

### Survivability

By reducing the volume of the Absorber, the effective 'sail' area is reduced, thus allowing the device to be detuned during extreme waves and thereby improving the survivability. The Absorber has naturally good survivability characteristics as it sits immersed in fluid and is not subject to slamming forces. The Absorber body moves with the waves and can deform to shed excessive loads. In addition large or breaking waves will be able to pass over the structure without causing structural damage. The shell of the Collapsing Absorber of the present invention can be made from a flexible polymer based material such that it is resistant to UV degradation and can be repetitiously inflated and collapsed without incurring any significant structural damage thereto. Thus the longevity of the skin material also contributes to the survivability of the Collapsible Absorber.

Improvements and modifications may be incorporated herein without deviating from the scope of this invention.

## Claims

1. A wave energy absorber for use in extracting energy from a fluid wave medium such as water, the wave energy absorber comprising:
a central column (2) with a first end (3) which, when the device is deployed is positioned at or above the surface of the wave medium and a second end (4) positioned at a depth below the surface;
an expandable shell (5) having an internal cavity for receiving fluid, the expandable shell being connected to the column (2) and to a shell connector (13), the connections from the expandable shell (5) to the central column (2) and to the shell connector (13) being at opposing ends of the expandable shell (5),
wherein, an arrangement of valves comprises one or more inlet valve (6) positioned to allow fluid into the expandable shell and one or more outlet valve (7) to allow fluid to leave the expandable shell (5) to allow the movement of the fluid in the wave medium and assists with pumping fluid into the internal cavity of the expandable shell to inflate the expandable shell (5) with fluid and maintain a positive pressure internal to the expandable shell with respect to the pressure outside the expandable shell and where, the expandable shell (5), undergoes local deformation by movement of fluid waves across the outer surface of the expandable shell and one or more pressure gradient is created inside the expandable shell which induces fluid flow within the expandable shell to assist pumping and the maintenance of a positive pressure internal to the expandable shell.

2. A wave energy absorber as claimed in claim 1 wherein, the inlet valve is positioned towards the second position.

3. A wave energy absorber as claimed in claim 1 wherein , the outlet valve is positioned to allow fluid to leave the device above the expandable shell, thereby assisting in the provision of a positive fluid pressure inside the expandable shell.

4. A wave energy absorber as claimed in claim 1 wherein, the outlet valve is positioned at or near the first end of the central column.

5. A wave energy absorber as claimed in claim 1 wherein, the local deformation of the shell induces fluid flow in a substantially orbital motion within the expandable shell.

6. A wave energy converter as claimed in any preceding claim wherein, the shell connector is moveable along the major axis of the central column and a difference in buoyancy of the shell connector and the central column causes the shell connector to move along the major axis of the central column, reduce the distance between opposing ends of the expandable shell, thereby expanding the expandable shell in a radial direction with respect to the central column.

7. A wave energy absorber as claimed in claim 6 wherein, the shell connector has greater buoyancy than the central column and the expandable shell is connected to the central column at or near the first end.

8. A wave energy absorber as claimed in claim 6 wherein, the shell connector has less buoyancy than the central column and the expandable shell is connected to the central column at or near the second end.

9. A wave energy absorber as claimed in any preceding claim wherein, the expandable shell comprises a non rigid, fabric-type, material.

10. A wave energy absorber as claimed in any preceding claim wherein the expandable shell comprises one or more flexible ribs which extend between opposing ends of the expandable shell and which bend and are under tension when the buoyancy forces are applied on deployment of the wave energy absorber.

11. A wave energy absorber as claimed in any preceding claim wherein, the expandable shell is provided internally with a secondary body of substantially neutral buoyancy which is free to move independently of the expandable shell, although constrained such that it rmains within the enclosed volume of the shell to encourage the orbital motion of the fluid within the shell such as the inflation mechanism is enhanced.

12. A wave energy absorber as claimed in any preceding claim wherein, the device is equipped with a series of buoyancy modules located at suitable locations along the central column.

13. A wave energy absorber as claimed in claim 12 wherein, the buoyancy modules comprise a sealed vessel.

14. A wave energy absorber as claimed in claim 12 or claim 13 wherein, the buoyancy modules may be partially or substantially filled with sea water or any other comparatively dense fluid to vary their buoyancy.

15. A wave energy absorber as claimed in claim 12 or claim 13 wherein, the buoyancy modules may be partially or substantially filled with air or any other fluid of comparatively low density when compared with sea water.

## Patentansprüche

1. Wellenenergieabsorber zur Verwendung beim Ausziehen von Energie aus einem fließfähigen Wellenmedium, wie etwa Wasser, wobei der Wellenenergieabsorber Folgendes umfasst:
eine zentrale Säule (2) mit einem ersten Ende (3), das, wenn sich die Vorrichtung im Einsatz befindet, an oder über der Oberfläche des Wellenmediums positioniert ist und einem zweiten Ende (4), das in einer Tiefe unter der Oberfläche positioniert ist;
eine expandierbare Hülle (5), die einen inwendigen Hohlraum zum Aufnehmen von Fluid aufweist, wobei die expandierbare Hülle mit der Säule (2) und mit einem Hüllenverbinder (13) verbunden ist, wobei die Verbindungen von der expandierbaren Hülle (5) zu der zentralen Säule (2) und zu dem Hüllenverbinder (13) an einander gegenüberliegenden Enden der expandierbaren Hülle (5) liegen,
wobei eine Anordnung von Ventilen ein oder mehrere Einlassventile (6), die positioniert sind, um Fluid in die expandierbare Hülle hinein zu lassen und ein oder mehr Auslassventile (7) um Fluid aus der expandierbaren Hülle (5) austreten zu lassen, umfasst, um die Bewegung des Fluids in dem Wellenmedium zuzulassen und das Pumpen von Fluid in den inwendigen Hohlraum hinein unterstützt, um die expandierbare Hülle (5) mit Fluid aufzublasen und in Bezug auf den Druck außerhalb der expandierbaren Hülle einen Überdruck innerhalb der expandierbaren Hülle aufrechtzuerhalten, und wobei die expandierbare Hülle (5) durch Bewegung von Fluidwellen über die äußere Oberfläche der expandierbaren Hülle örtliche Verformung erfährt und ein oder mehr Druckgradienten in der expandierbaren Hülle erzeugt werden, was einen Fluidstrom in der expandierbaren Hülle hervorruft, um das Pumpen und das Aufrechterhalten eines Überdrucks innerhalb der expandierbaren Hülle zu unterstützen.

2. Wellenenergieabsorber nach Anspruch 1, wobei das Einlassventil zu der zweiten Position hin positioniert ist.

3. Wellenenergieabsorber nach Anspruch 1, wobei das Auslassventil dazu positioniert ist, Fluid über der expandierbaren Hülle aus der Vorrichtung austreten zu lassen, wodurch das Bereitstellen eines Fluidüberdrucks in der expandierbaren Hülle unterstütz wird.

4. Wellenenergieabsorber nach Anspruch 1, wobei das Auslassventil an oder nah bei dem ersten Ende der zentralen Säule positioniert ist.

5. Wellenenergieabsorber nach Anspruch 1, wobei die örtliche Verformung der Hülle einen Fluidstrom in einer im Wesentlichen kreisförmigen Bewegung in der expandierbaren Hülle hervorruft.

6. Wellenenergiewandler nach einem der vorangehenden Ansprüche, wobei der Hüllenverbinder entlang der Hauptachse der zentralen Säule beweglich ist und ein Unterschied des Auftriebs des Hüllenverbinders und der zentralen Säule den Hüllenverbinder veranlasst, sich entlang der Hauptachse der zentralen Säule zu bewegen, den Abstand zwischen einander gegenüberliegenden Enden der expandierbaren Hülle zu verringern und dadurch die expandierbare Hülle in einer in Bezug auf die zentrale Säule radialen Richtung zu expandieren.

7. Wellenenergieabsorber nach Anspruch 6, wobei der Hüllenverbinder einen größeren Auftrieb aufweist als die zentrale Säule und die expandierbare Hülle an oder nah bei dem ersten Ende mit der zentralen Säule verbunden ist.

8. Wellenenergieabsorber nach Anspruch 6, wobei der Hüllenverbinder weniger Auftrieb aufweist als die zentrale Säule und die expandierbare Hülle an oder nah bei dem zweiten Ende mit der zentralen Säule verbunden ist.

9. Wellenenergieabsorber nach einem der vorangehenden Ansprüche, wobei die expandierbare Hülle ein nicht starres, gewebeartiges Material umfasst.

10. Wellenenergieabsorber nach einem der vorangehenden Ansprüche, wobei die expandierbare Hülle eine oder mehrere biegsame Rippen aufweist, die sich zwischen einander gegenüberliegenden Enden der expandierbaren Hülle erstrecken und die sich biegen und unter Zugspannung stehen, wenn die Auftriebskräfte ausgeübt werden, wenn der Wellenenergieabsorber zum Einsatz gebracht wird.

11. Wellenenergieabsorber nach einem der vorangehenden Ansprüche, wobei die expandierbare Hülle inwendig mit einem Sekundärkörper mit im Wesentlichen neutralem Auftrieb versehen ist, der sich ungehindert unabhängig von der expandierbaren Hülle bewegen kann, jedoch derart eingeschränkt ist, dass er innerhalb des eingeschlossenen Volumens der Hülle verbleibt, um die kreisförmige Bewegung des Fluids in der Hülle zu fördern, sodass der Aufblasmechanismus verstärkt wird.

12. Wellenenergieabsorber nach einem der vorangehenden Ansprüche, wobei die Vorrichtung mit einer Reihe von Auftriebsmodulen ausgestattet ist, die sich an geeigneten Stellen entlang der zentralen Säule befinden.

13. Wellenenergieabsorber nach Anspruch 12, wobei die Auftriebsmodule ein geschlossenes Gefäß umfassen.

14. Wellenenergieabsorber nach Anspruch 12 oder Anspruch 13, wobei die Auftriebsmodule teilweise oder im Wesentlichen mit Meerwasser oder einem beliebigen anderen vergleichsweise dichten Fluid gefüllt werden können, um ihren Auftrieb zu verändern.

15. Wellenenergieabsorber nach Anspruch 12 oder Anspruch 13, wobei die Auftriebsmodule teilweise oder im Wesentlichen mit Luft oder einem beliebigen anderen Fluid mit vergleichsweise geringer Dichte im Vergleich zu Meerwasser gefüllt werden können.

## Revendications

1. Un dispositif absorbeur d'énergie des vagues destiné à être utilisé dans l'extraction d'énergie à partir d'un milieu de vagues fluide tel que de l'eau, le dispositif absorbeur d'énergie des vagues comprenant :
une colonne centrale (2) avec une première extrémité (3) qui, lorsque le dispositif est déployé, est positionnée au niveau ou au-dessus de la surface du milieu de vagues et une deuxième extrémité (4) positionnée à une profondeur au-dessous de la surface ;
une coque extensible (5) ayant une cavité interne pour recevoir du fluide, la coque extensible étant raccordée à la colonne (2) et à un dispositif de raccordement de coque (13), les raccords de la coque extensible (5) à la colonne centrale (2) et au dispositif de raccordement de coque (13) étant au niveau d'extrémités opposées de la coque extensible (5),
dans lequel un agencement de vannes comprend une ou plusieurs vannes d'entrée (6) positionnées afin de permettre à du fluide de pénétrer dans la coque extensible et une ou plusieurs vannes de sortie (7) afin de permettre à du fluide de quitter la coque extensible (5) pour permettre le déplacement du fluide dans le milieu de vagues et aider à pomper du fluide jusque dans la cavité interne de la coque extensible afin de gonfler la coque extensible (5) avec du fluide et de maintenir une pression positive à l'intérieur de la coque extensible par rapport à la pression à l'extérieur de la coque extensible et où la coque extensible (5) subit une déformation locale du fait du déplacement de vagues de fluide de part et d'autre de la surface externe de la coque extensible et un ou plusieurs gradients de pression sont créés à l'intérieur de la coque extensible, ce qui induit un écoulement de fluide au sein de la coque extensible afin d'aider à pomper et à maintenir une pression positive à l'intérieur de la coque extensible.

2. Un dispositif absorbeur d'énergie des vagues tel que revendiqué dans la revendication 1 dans lequel la vanne d'entrée est positionnée vers la deuxième position.

3. Un dispositif absorbeur d'énergie des vagues tel que revendiqué dans la revendication 1 dans lequel la vanne de sortie est positionnée afin de permettre à du fluide de quitter le dispositif au-dessus de la coque extensible, aidant de ce fait à fournir une pression de fluide positive à l'intérieur de la coque extensible.

4. Un dispositif absorbeur d'énergie des vagues tel que revendiqué dans la revendication 1 dans lequel la vanne de sortie est positionnée au niveau ou près de la première extrémité de la colonne centrale.

5. Un dispositif absorbeur d'énergie des vagues tel que revendiqué dans la revendication 1 dans lequel la déformation locale de la coque induit un écoulement de fluide dans un mouvement substantiellement orbital au sein de la coque extensible.

6. Un dispositif convertisseur d'énergie des vagues tel que revendiqué dans n'importe quelle revendication précédente dans lequel le dispositif de raccordement de coque peut être déplacé le long du grand axe de la colonne centrale et une différence de flottabilité entre le dispositif de raccordement de coque et la colonne centrale amène le dispositif de raccordement de coque à se déplacer le long du grand axe de la colonne centrale, réduire la distance entre des extrémités opposées de la coque extensible, agrandissant ainsi la coque extensible dans une direction radiale par rapport à la colonne centrale.

7. Un dispositif absorbeur d'énergie des vagues tel que revendiqué dans la revendication 6 dans lequel le dispositif de raccordement de coque a une flottabilité plus grande que la colonne centrale et la coque extensible est raccordée à la colonne centrale au niveau ou près de la première extrémité.

8. Un dispositif absorbeur d'énergie des vagues tel que revendiqué dans la revendication 6 dans lequel le dispositif de raccordement de coque a une flottabilité plus faible que la colonne centrale et la coque extensible est raccordée à la colonne centrale au niveau ou près de la deuxième extrémité.

9. Un dispositif absorbeur d'énergie des vagues tel que revendiqué dans n'importe quelle revendication précédente dans lequel la coque extensible comprend un matériau de type tissu non rigide.

10. Un dispositif absorbeur d'énergie des vagues tel que revendiqué dans n'importe quelle revendication précédente dans lequel la coque extensible comprend une ou plusieurs nervures flexibles qui s'étendent entre des extrémités opposées de la coque extensible et qui plient et sont soumises à une traction lorsque les forces de flottabilité sont appliquées au déploiement du dispositif absorbeur d'énergie des vagues.

11. Un dispositif absorbeur d'énergie des vagues tel que revendiqué dans n'importe quelle revendication précédente dans lequel la coque extensible est munie de façon interne d'un corps secondaire à flottabilité substantiellement neutre, lequel est libre de se déplacer indépendamment de la coque extensible, bien que contraint de telle sorte qu'il demeure au sein du volume clos de la coque afin d'encourager le mouvement orbital du fluide au sein de la coque de telle sorte que le mécanisme de gonflage soit renforcé.

12. Un dispositif absorbeur d'énergie des vagues tel que revendiqué dans n'importe quelle revendication précédente dans lequel le dispositif est équipé d'une série de modules de flottabilité situés au niveau d'emplacements appropriés le long de la colonne centrale.

13. Un dispositif absorbeur d'énergie des vagues tel que revendiqué dans la revendication 12 dans lequel les modules de flottabilité comprennent un récipient étanchéifié.

14. Un dispositif absorbeur d'énergie des vagues tel que revendiqué dans la revendication 12 ou la revendication 13 dans lequel les modules de flottabilité peuvent être en partie ou substantiellement remplis d'eau de mer ou de n'importe quel autre fluide comparativement dense afin de faire varier leur flottabilité.

15. Un dispositif absorbeur d'énergie des vagues tel que revendiqué dans la revendication 12 ou la revendication 13 dans lequel les modules de flottabilité peuvent être en partie ou substantiellement remplis d'air ou de n'importe quel autre fluide de masse volumique comparativement faible par comparaison avec l'eau de mer.
